# EUROPÄISCHE PATENTANMELDUNG

(11) **EP 1 063 583 A2**
(43) Veröffentlichungstag der Anmeldung: **27.12.2000**
(21) Anmeldenummer: 00113006.1
(22) Anmeldetag: 20.06.2000
(51) Int. Cl.: G06F 3/14

(54) **Vorrichtung und Verfahren zum Steuern einer Datenausgabe auf zumindest zwei Ausgabegeräte**

(30) Priorität: 21.06.1999 DE 19928308
(71) Anmelder: Neon Härter GmbH & Co., 80469 München (DE)
(72) Erfinder: Thyssen, Matthias Norbert, 46147 Oberhausen (DE)
(74) Vertreter: Beetz & Partner Patentanwälte

(57) **Zusammenfassung**

Die Erfindung betrifft eine Vorrichtung und ein Verfahren zum Steuern einer Datenausgabe auf zumindest zwei Ausgabegeräte 4, wobei vorgefertigte Grafiken und Animationen gegebenenfalls mit Datenquellen verknüpft und in ein Zeitschema eingefügt auf den Ausgabegeräten 4 dargestellt werden können. Über beispielsweise eine Internetverbindung können die einzelnen Ereignisse über Playmodule 2 zeitgenau den Ausgabegeräten 4 zugewiesen und angezeigt werden. Erfindungsgemäß ist ein Workmodul 1 zur zentralen Steuerung und mehrere Playmodule 2 vorgesehen. Üblicherweise ist das Workmodul 1 in einer Zentrale und die Playmodule 2 sind in entsprechenden Filialen vorgesehen.

## Beschreibung

Die Erfindung betrifft eine Vorrichtung und ein Verfahren zum Steuern einer Datenausgabe auf zumindest zwei Ausgabegeräte und insbesondere ein Datenmanagement zur Verwaltung von Bildausgabegeräten.

Im Stand der Technik sind beispielsweise Vortragssysteme bekannt, welche es auf einem lokalen Personal Computer (PC) ermöglichen, eine entsprechende Präsentation auszuarbeiten. Hierbei kann der Benutzer des PCs verschiedene Bilddaten mit Text verknüpfen und diese dann in einer von ihm gewählten Abfolge auf einem Bildschirm anzeigen. Ein Beispiel einer derartigen Software ist das Programm PowerPoint von der Firma Microsoft.

Ein derartiges System ist jedoch auf eine lokale Einzelplatzanwendung beschränkt und bietet weiterhin keine Möglichkeit der Einbindung von externen sich eventuell ständig ändernden Daten.

Es ist eine Aufgabe der Erfindung, eine Vorrichtung und ein Verfahren zum Steuern einer Datenausgabe auf zumindest zwei Ausgabegeräte zu schaffen, die zentral gesteuert eine Mehrzahl von Ausgabegeräten kostengünstig und auf einfache Weise überwachen und verwalten können.

Die Aufgabe wird gemäß den Merkmalen der unabhängigen Patentansprüche gelöst. Die abhängigen Patentansprüche zeigen vorteilhafte Ausführungsformen und Weiterentwicklungen der Erfindung auf.

Erfindungsgemäß können vorgefertigte Grafiken und Animationen gegebenenfalls mit Datenquellen verknüpft und in ein Zeitschema eingefügt werden. Über ein entsprechendes Datennetzwerk können dann die einzelnen Ereignisse zeitgenau Bildausgabegeräten zugewiesen und angezeigt werden.

Eine Anwendung der Erfindung kann beispielsweise bei Großkinos bzw. Kinoketten liegen. Hierbei wäre das Workmodul bei der zentralen Verwaltung des Unternehmens angeordnet. Die Playmodule wären in diesem Fall beispielsweise bei den jeweiligen Kinos der Filialen vorgesehen. Durch die erfindungsgemäße Vorrichtung und das erfindungsgemäße Verfahren ist es nun möglich, daß über die Zentralstelle sämtliche Bildausgabegeräte der jeweiligen Filialen angesteuert und verwaltet werden können. Die jeweiligen Ausgabegeräte können beispielsweise Filmankündigungen, Filmstartzeiten, Hintergrundbilder, Werbegrafiken, Werbeanimationen, die noch verfügbaren freien Plätze, usw. anzeigen.

Weiterhin ist das Workmodul in der Lage, sämtliche gerade gezeigten Bilddaten der Ausgabegeräte einzusehen und zu überprüfen. Durch die erfindungsgemäße Vorrichtung und das erfindungsgemäße Verfahren ist eine stark vereinfachte Verwaltung und Überwachung der einzelnen Ausgabegeräte möglich.

Eine weitere Anwendung der erfindungsgemäßen Vorrichtung und des erfindungsgemäßen Verfahrens könnte beispielsweise im Bereich von Fastfoodketten liegen. Derzeit beträgt beispielsweise die Umstellungszeit von entsprechenden Lebensmittelangeboten der Filialen dieser Ketten mehrere Monate. Im Augenblick müssen dazu entsprechende Grafiken gedruckt werden, diese müssen dann auf entsprechenden transparenten Flächen aufgebracht werden und dann in jeder einzelnen Filiale per Hand angebracht werden. Weiterhin ist die Zentrale nicht jederzeit darüber informiert, welche Angebote gerade zu welchem Preis in jeder einzelnen Filiale vorliegen. Folglich ist die Überwachung der einzelnen Filialen erschwert und die Umstellung auf neue Angebote erfordert viel Zeit und damit verbunden einen hohen Kostenaufwand.

Auch hier kann die erfindungsgemäße Vorrichtung und das erfindungsgemäße Verfahren einen großen Vorteil bringen. Die üblichen Anzeigeflächen würden hierbei durch Ausgabegeräte, beispielsweise durch Monitore ersetzt werden. Über die vorgesehenen Playmodule und das Workmodul könnten dann zentral gesteuert die jeweiligen Angebote in jeder Filiale bzw. in jeder Lokalität zentral geändert und gesteuert werden. Weiterhin könnten einfach entsprechende Werbedaten auf den jeweiligen Bildschirmen dargestellt werden. Zudem hat das Workmodul in der Zentrale einen zeitgenauen Überblick und eine exakte Kontrolle über die derzeit vorliegenden Darstellungen auf den jeweiligen Ausgabegeräten.

Die obigen Ausführungen stellen nur Beispiele für mögliche Anwendungen der erfindungsgemäßen Vorrichtung und des erfindungsgemäßen Verfahrens dar. Natürlich sind auch andere Anwendungen denkbar, bei denen eine zentrale Steuerung und eine zentrale Verwaltung von Bildausgabegeräten sinnvoll ist. Als weiteres und letztes Beispiel soll hier der Einsatz in Supermarktketten erwähnt werden, wobei durch die entsprechende Vorsehung von Bildschirmen oder Anzeigegeräten zentral Preisänderungen vorgenommen werden könnten. Eine externe Dateneingabe in die Playmodule der Filialen könnte beispielsweise durch Wiegegeräte von Produkten erfolgen. Derartige Wiegegeräte könnten beispielsweise das Gewicht von Produkten ermitteln, wodurch dann auf die Menge der vorliegenden Produkte geschlossen werden könnte. Bei abnehmender Menge könnte lokal durch das Playmodul (über die eingehenden externen Daten) eine jeweilige Preisanpassung des Produkts vorgenommen werden. Dies würde natürlich jeweils von dem Workmodul überwacht werden können.

Im folgenden werden Ausführungsbeispiele der Erfindung anhand von schematischen Figuren näher erläutert. Es zeigen:
- Fig. 1: ein Blockschaltbild
und
- Fig. 2: eine Ereignisliste.

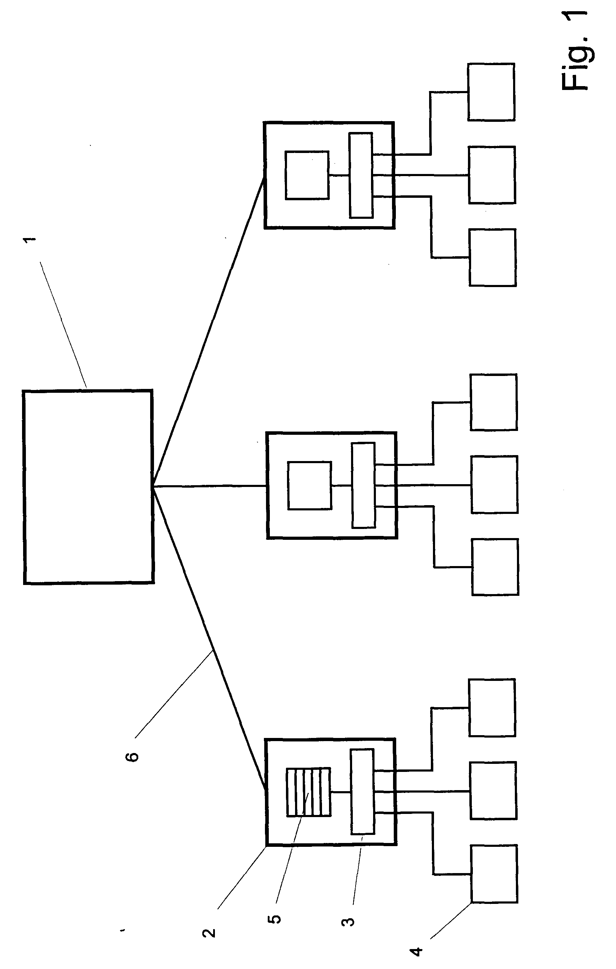

In Fig. 1 ist ein Workmodul 1 über entsprechende Datenübertragungsverbindungen 4 mit entsprechenden Playmodulen 2 verbunden. Die Playmodule 2 sind über entsprechende Verteiler 3 mit Ausgabegeräten 4 verbunden.

An dieser Stelle sei angemerkt, daß zusätzlich ein Servicemodul vorhanden sein kann, welches in der Lage ist, Online über eine entsprechende Datenverbindung das Workmodul 1 und/oder die Playmodule 2 zu warten und Fehler zu beheben. Das Servicemodul könnte beispielsweise bei dem Systemprovider vorgesehen sein. Weiterhin kann zusätzlich ein Mastermodul vorgesehen sein, das zwischen das Workmodul 1 und das bzw. die Playmodule 2 geschaltet ist, um eventuell übergeordnete Funktionen auszuüben.

Das Workmodul 1 kann beispielsweise einen Bildschirm und eine Tastatur enthalten, wobei der Bildschirm ein Anzeigegerät und die Tastatur ein Dateneingabegerät ist. Das Workmodul 1 kann weiterhin einen internen Speicher enthalten, in dem, angefordert von dem Dateneingabegerät, Ablaufpläne bzw. Ereignislisten 5 erzeugt werden können. Die Ablaufpläne können getrennt für jedes Ausgabegerät 4 erzeugt werden. Der Ablaufplan für jedes Ausgabegerät 4 kann eine absolute Startzeit und Relativzeiten aufweisen. Weiterhin kann die Liste entsprechende Ereignisse enthalten. Diese Ereignisse können beispielsweise darzustellende Bilddaten, darzustellende externe Datenbankdaten oder Videoanimationen sein.

Das Erstellen der Liste kann durch ein Auswählen der Ereignisse aus einer Ereignisbibliothek erfolgen. Die Ereignisbibiliothek kann in dem Datenspeicher des Workmoduls 1 abgespeichert sein. Für jedes in die Liste aufgenommene Ereignis führt das Workmodul 1 eine Plausibilitätsüberprüfung durch. Die Plausibilitätsüberprüfung umfaßt beispielsweise ein Überprüfen, ob die darzustellenden Bilddaten ein passendes Bildformat aufweisen. Weiterhin kann beispielsweise überprüft werden, ob die externen Daten in dieser Kombination mit den gewählten Bilddaten zusammengefaßt werden können.

Das Workmodul 1 kann weiterhin Initialisierungsdaten von jedem einzelnen Playmodul 2 laden. Diese Initialisierungsdaten können den Namen, den Ort und Kommentare enthalten, welche dem Playmodul 2 zugeordnet sind. Weiterhin können diese Initialisierungsdaten die Anzahl der Ausgabegeräte 4, deren Auflösung und die Art der an das Playmodul 2 angeschlossenen externen Systeme enthalten. Externe Systeme könnten beispielsweise durch entsprechende Datenbanken gebildet werden. Diese Datenbanken könnten beispielsweise von Kassensystemen mit Daten beliefert werden, wobei diese Daten beispielsweise die Anzahl von noch freien Kinoplätzen in einem betreffenden Kino sein können.

Über eine entsprechende Eingabe des dem Workmodul 1 zugeordneten Dateneingabegeräts kann weiterhin eine Maske generiert werden, welche beispielsweise damit kombinierte externe Daten aus einer Datenbank enthält, wenn die Liste im Playmodul 2 ausgeführt wird. Ganz allgemein können hierbei Felder geöffnet werden, die auf bestimmte Adressen verweisen. Eine solche Adresse könnte beispielsweise auch eine Internetadresse sein, bei der die entsprechenden Daten, welche in das Feld einzufügen wären, vorhanden sind.

Das Playmodul 2 kann ebenfalls ein zugehöriges Anzeigegerät und ein zugehöriges Dateneingabegerät enthalten. Nach dem Empfang der durch das Workmodul 1 erzeugten Liste kann das Playmodul 2 diese in einem Speicher speichern und ausführen. Beim Abfragen einer entsprechenden Datenbank und/oder von allgemeinen externen Daten kann das Playmodul 2 dann bei dem Abarbeiten des Befehls für das Holen von externen Daten einen separaten Programmablauf starten. Dieser separate Programmablauf kann dann die externen Daten lesen und beispielsweise entsprechend filtern. Eine entsprechende Filterung läge beispielsweise bei Daten betreffend die Anzahl von noch zur Verfügung stehenden Kinoplätzen darin, daß die Daten nur dann mit dem Bild des Ausgabegerätes kombiniert werden, wenn die Anzahl der Plätze beispielsweise kleiner als 100 ist. Darüber würde keine Anzeige dieser Daten bzw. keine Kombination der externen Daten mit dem Bild des Ausgabegeräts erfolgen.

Weiterhin ist das Workmodul 1 in der Lage, das jeweilige Playmodul 4 zu überprüfen. Dies kann beispielsweise dadurch erfolgen, daß die Lesefrequenz des Playmoduls 2 von dem entsprechenden Verzeichnis einer Speichervorrichtung des Workmoduls 1, das diesem Playmodul 2 zugeordnet ist, überprüft. Wenn das Playmodul 2 nicht mit einer entsprechenden Frequenz auf die ihm zugeordnete Datei in dem ihm zugeordneten Verzeichnung zugreift, so kann beispielsweise auf eine Funktionsstörung des Playmoduls 2 geschlossen werden.

Weiterhin kann im Playmodul 2 beispielsweise eine Vorladung von entsprechenden Bilddaten, die auf den Ausgabegeräten 4 anzuzeigen sind, eingestellt werden. Normalerweise ist jeder Darstellung des Ausgabegeräts 4 eine entsprechende Datei der Speichereinrichtung des Playmoduls 2 zugeordnet. Das Playmodul 2 überprüft in vorbestimmten Zeitabständen dieses Verzeichnis und lädt sich bei entsprechenden Änderungen die ihm zugeordnete Datei in einen in dem Playmodul 2 vorgesehenen Speicher. Diese Datei wird dann ausgeführt und das der Datei zugeordnete Bildschirmbild wird dann auf dem mit dem Playmodul 2 verbundenen Ausgabegerät 4 angezeigt. Die Datei beinhaltet eine entsprechende Relativzeit, welche angibt, wie lange das entsprechende Bildschirmbild an dem Ausgabegerät 4 angezeigt werden soll. Nach Ablauf dieser Relativzeit fragt das Playmodul 2 wiederum das diesem Ausgabegerät 4 zugeordnete Verzeichnis in dem Playmodul 2 ab. Sollte sich dort keine Datei bzw. keine neue Datei befinden, kann das Playmodul 2 darauf schließen, daß sich keine Änderungen ergeben. Das Playmodul 2 kann in diesem Fall beispielsweise die bestehende Bildschirmdarstellung weiter aufrechterhalten oder keine Darstellung vornehmen.

Folglich ist normalerweise jeder Datei des Playmoduls 2 eine bestimmte Bildschirmdarstellung zugeordnet.

Wie oben schon erwähnt, kann das Playmodul 2 eine Vorladung von Bildern veranlassen. Hierbei wird eine gesonderte Datei gebildet, die zumindest eine Bildschirmdarstellung (natürlich immer eventuell kombiniert mit externen und/oder sich ändernden Daten) enthält. Bevorzugt werden beim Vorladen mehrere Bildschirmdarstellungen zusammengefaßt und für das Playmodul 2 in dem entsprechenden Verzeichnis auf beispielsweise einer Festplatte des Playmoduls 2 zur Verfügung gestellt. Das Playmodul 2 kann dann diese Datei lesen und entsprechend ausführen.

Jedes Playmodul 2 kann einen Verteiler 3 aufweisen, über den die dem Playmodul 2 zugeordneten Ausgabegeräte 4 angesteuert werden.

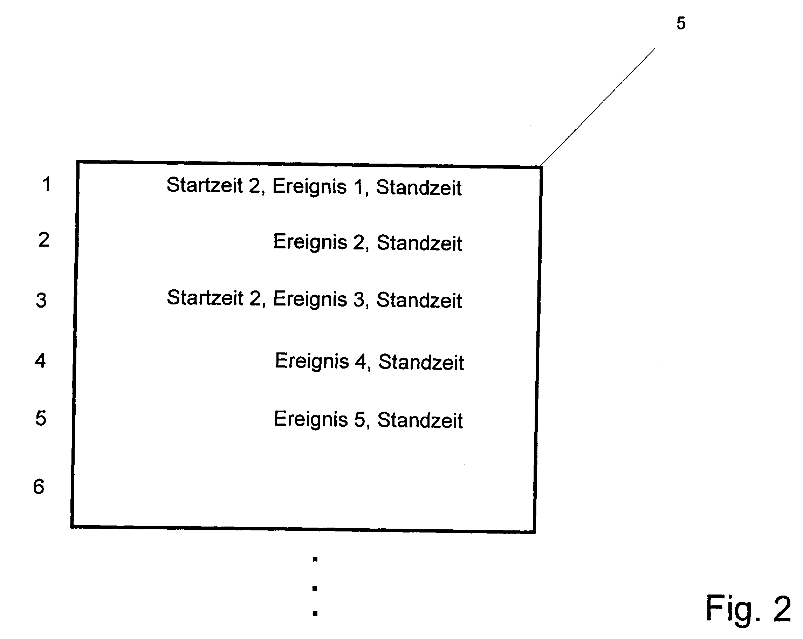

Der in Fig. 1 gezeigte Verteiler ist in der Lage, die an das Playmodul 2 angeschlossenen Ausgabegeräte 4 entsprechend anzusteuern. Die Ansteuerung erfolgt gemäß der im Playmodul 2 vorhandenen Ereignisliste 5 (siehe Fig. 2).

Im Playmodul können ein Ablaufsteuerungsprogramm und ein Anzeigeprogramm ablaufen. Das Ablaufsteuerungsprogramm kann die Ereignisliste 5 sequentiell lesen und die entsprechenden Unterprogramme bzw. Plugins ausführen. Ergibt beispielsweise die Ereignisliste 5, daß ein bestimmtes Ausgabegerät 4 angesteuert werden soll, so würde ein Anzeigeprogramm gestartet, welches die erforderlichen Daten über dem Verteiler 3 zum entsprechenden Ausgabegerät 4 übermittelt.

Die Ereignisliste 5 kann verschiedene Arten von Ereignissen enthalten, beispielsweise können dies grafische bzw. Maskenereignisse sein. Natürlich könnten auch beispielsweise ein Computer aktiviert, eine Uhr eingestellt oder eine Internetseite abgerufen und angezeigt werden. Diese Aktionen können beispielsweise einer Liste bzw. einer Zeile der Ereignisliste 5 zugeordnet sein, wobei ein Ereignisblock jeweils einem Ausgabegerät 4 zugeordnet sein kann.

Das Workmodul 1 kann weiterhin die Möglichkeit bieten, daß beispielsweise ein Werbekunde eine entsprechende Internetseite, die vom Workmodul 1 zur Verfügung gestellt wird, anwählt und die eigene Werbung, die auf entsprechenden Playmodulen 2 bzw. Anzeigegeräten 4 ablaufen soll, zu verändern.

Das erfindungsgemäße Monitor-Management-System für mehrere Monitore ist somit auch vom jeweiligen Kunden abänderbar gestaltbar.

Das Playmodul 2 kann beispielsweise für jedes Ausgabegerät 4 eine entsprechende Grafikkarte enthalten, wobei das entsprechende Anzeigeprogramm dann jeweils die dem Ausgabegerät 4 zugeordnete Grafikkarte entsprechend ansteuern würde. Das Ganze wird natürlich vom Ablaufsteuerungsprogramm aktiviert, welches die Ereignisliste 5 liest und ausführt.

Fig. 2 zeigt ein Beispiel einer Ereignisliste 5. Diese Ereignisliste ist einem Ausgabegerät 4 zugeordnet. Somit können im Playmodul 2 mehrere Ereignislisten 5 vorgesehen sein, wobei jede Ereignisliste 5 einem Ausgabegerät 4 zugeordnet ist. Natürlich könnte es auch zweckmäßig sein, nur eine Ereignisliste 5 für alle Ausgabegeräte 4 vorzusehen.

Die in Fig. 2 dargestellte Ereignisliste ist in verschiedene Zeilen aufgeteilt. Beim Start würde beispielsweise die Zeile 1 zuerst ausgeführt, dann die Zeile 2, und so weiter.

Die Zeile 1, beispielsweise, enthält eine Startzeit 1, die eine Absolutzeit darstellt. Zu dieser Startzeit 1 wird ein Ereignis 1 ausgeführt, wobei zusätzlich eine gewisse Standzeit bzw. die Dauer einer gewissen Darstellung mit angegeben ist. Das Ereignis kann beispielsweise die Darstellung einer Grafik auf einem Ausgabegerät 4 sein. Natürlich kann das Ereignis 1 auch beispielsweise das Einlesen von externen Daten betreffen oder das Aktivieren eines weiteren Computers.

Wenn die Standzeit der Zeile 1 abgelaufen ist, so wird das Ereignis 2 mit einer weiteren Standzeit aktiviert.

Sobald die Startzeit 2 erreicht wird, wird wiederum ein neues Ereignis 3 ausgeführt, und so weiter.

Das Lesen der Ereignisliste 5 kann durch das Ablaufsteuerungsprogramm erfolgen, welches im Playmodul 2 ausgeführt wird.

Die Ereignisliste 5 wird im Workmodul 1 beispielsweise durch einen Funktionsgenerator erzeugt. Hierbei kann die Ereignisliste 5 erstellt und mit den notwendigen Plugins bzw. Ereignisausführungsprogrammen verknüpft werden. Weiterhin werden alle notwendigen Daten für das spätere Ausführen der in der Ereignisliste 5 zu vollziehenden Aktionen mit an die Ereignisliste angebunden, so daß diese dann zum Playmodul 2 über die Datenleitung 6 übertragen werden kann. Zweckmäßigerweise kann die fertiggestellte Ereignisliste im Workmodul 1 gepacked werden, bevor diese zum Playmodul 2 übertragen wird. Dort würde diese Datei dann wieder entpacked werden, so daß die Ereignisliste mit zugehörigen bzw. notwendigen Plugins dann dort problemlos ausgeführt werden kann. Das Playmodul 2 kann auch schon entsprechende Plugins bzw. Programme, die zum Ausführen der Ereignisse bzw. Aktionen notwendig sind, enthalten. Diese Unterprogramme müßten dann nicht mehr vom Workmodul 1 zum Playmodul 2 übertragen werden. Natürlich kann dadurch die Datenübertragungseffizienz erhöht werden.

Weiterhin sei angemerkt, daß die Playmodule 2 mit dem Workmodul 1 zweckmäßigerweise über das Internet verbunden sind.

Der Verteiler 3 kann weiterhin so ausgestaltet sein, daß er entweder per Hardware durch eine entsprechende Schaltung oder durch das Anzeigeprogramm in der Lage ist, die Mehrzahl von Monitoren bzw. Anzeigegeräten 4 mit entsprechenden Grafik- bzw. Bilddaten zu versorgen. Der Verteiler 3 dient somit als Weiche, die in der Lage ist, die vom Ablaufsteuerungsprogramm zur Verfügung gestellten Daten, die auf der Ereignisliste 5 basieren, dem zugeordneten Ausgabegerät 4 zuzuordnen und dieses Ausgabegerät entsprechend anzusteuern. Der Verteiler 3 kann somit ebenso in der Lage sein, verschiedene Grafikformate der Ausgabegeräte 4 zu berücksichtigen. Weiterhin kann der Verteiler 3 durch eine Vielzahl von Grafikkarten (nicht dargestellt) realisiert werden, die gemäß einer entsprechenden Logik angesteuert werden, um die Ereignisliste 5 auszuführen.

Im folgenden wird anhand von Ausführungsbeispielen der Modulaufbau der Erfindung näher erläutert.

Die Erfindung enthält zwei Hauptmodule:

Im Workmodul 1 werden Ereignisse in einen zeitorientierten Ablaufplan eingefügt und mit Attributen versehen, die bestimmen, in welcher Form diese Ereignisse angezeigt werden sollen.

Im Playmodul 2 werden die zusammengestellten Zeitpläne ausgelesen, mit den vorgebenen Datenquellen verknüpft und es werden die einzelnen Ereignisse für das Ausgabegerät 4 vorbereitet.

Im Workmodul 1 werden über einen Filter (PictureBook) Grafiken und Animationen in einen Zeitplan (TimeTable) übernommen.

In einem internen Modul (MaskenDesigner) werden die Verknüpfungen mit exterenen Datenquellen festgelegt.

Als Ergebnis werden alle benötigten Dateien in ein beliebiges Verzeichnis kopiert.

Das Playmodul 2 legt nach den Vorgaben des Zeitplans die Ereignisse für die Bildausgabe in Verzeichnissen bereit. Zusätzlich werden externe Daten nach Bedarf angefordert und mit den Ereignissen verknüpft.

Das Playmodul 2 liest sich aus dem einem Ausgabegerät 4 zugewiesenen Verzeichnis das aktuelle Ereignis und kann es im Anschluß an die Durchführung der eingestellten Überblendung darstellen.

Weiterhin sollen im folgenden beispielhaft die möglichen Systemkomponenten der Erfindung schematisch näher erläutert werden.

Das Workmodul 1 und die Playmodule 2 können als handelsübliche Computer ausgebildet sein.

Über das Playmodul 2 werden die verschiedenen Zulieferer verbunden: Die Ablaufpläne, die mit dem Workmodul 1 erstellt werden und die Datenbanken, aus denen Werte übernommen werden sollen. Nach dem Zusammenfügen der benötigten Informationen werden die relevanten Dateien so abgespeichert, daß die Ereignisdaten 5 ausgeführt werden können.

Mit dem Workmodul 1 wird für jeden Monitor bzw. für jedes Ausgabegerät 4 ein Ablaufplan bzw. eine Ereignisliste 5 erstellt, der als All.cpt in ein Unterverzeichnis des voreingestellten Arbeitsverzeichnisses kopiert wird. Diese Unterverzeichnisse tragen beispielsweise die fortlaufende Bezeichnung Mon001 - Mon00n.

Wird das Plamodul 2 gestartet oder wird von einem Workmodul 1 ein neuer Ablaufplan generier und zum Playmodul 2 geladen, werden die All.cpt-Dateien programmintern zusammengefaßt und auf Plausibilität geprüft. Dieser Vorgang kann eine längere Zeit in Anspruch nehmen. Es werden im einzelnen geprüft:
Das Vorhandensein aller Bild- und Animationsdateien
Die Möglichkeit des Zugriffs auf alle ausgewählten Schriften
Die Verbindung zu benötigten Datenbanken.

Bild- und Animations-Dateien werden mit den Ablaufplänen vom Workmodul 1 zum Playmodul 2 kopiert. Sie befinden sich im Unterverzeichnis "Stock" des Arbeitsverzeichnisses. Vor dem Kopieren werden die vorhandenen Dateien gelöscht. Werden Bild- oder Animationsdateien nicht oder unvollständig vorgefunden, wird der entsprechende Eintrag aus der Ablaufdatei gelöscht. Das Programm läuft in einem solchen Fall ohne diese Ereignisse ab.

Alle Schriften, die im Workmodul 1 verwendet wurden, werden mit den Ablaufplänen zum Playmodul 2 kopiert. Sind die aktuell gebrauchten Schriften noch nicht auf dem Playmodul 2 installiert, werden sie temporär eingebunden. Sind für das Playmodul 2 Schriften nicht darstellbar, werden sie durch den Schrifttyp "MS Sans Serif" ersetzt.

Sind Verbindungen zu externen Datenbanken nicht herzustellen, bleiben die für die Ausgabe dieser Informationen bestimmten Felder einer Maske leer.

Das Playmodul 2 schreibt auf Anforderung eine Reihe von Log-Dateien, in der die aufgetretenen Fehler im Klartext beschrieben werden. Diese Log-Dateien befinden sich im Unterverzeichnis "Debug" des Arbeitsverzeichnisses. Sie tragen den Namen Mater 32_001.log - Master 32_n.log. Nach dem Erreichen der letzten Datei wird die erste Datei wieder überschrieben. Die Datei mit dem höchsten Zähler beinhaltet die aktuellsten Informationen. (Das Erstellen von Log-Dateien wird initialisiert, indem in die Datei Playmodul.mmc, die sich im Arbeitsverzeichnis befindet, der folgende Eintrag hinzugefügt wird):
[Debug]
   LogFile=100 (Anzahl zu schreibender Dateien)

Nach Prüfung der Ereignisdateien startet das Playmodul 2 seine eigentliche Arbeit. Aus den Ablaufplänen werden die jeweils aktuell darzustellenden Dateien gefiltert.

Handelt es sich um eine Bild- oder Animationsdatei werden Pfad (Arbeitsverzeichnis\Stock) und Name der Datei zusammen mit der vorgegebenen Standzeit und der Form der Überblendung in eine jeweils neu generierte Datei geschrieben, die den Namen Ablauf.dat trägt und in das jeweilige cMon*n*-Verzeichnis kopiert wird.

Handelt es sich bei dem gefundenen Ereignis um eine Maske, wird im Speicher des Servers zuerst das Hintergrundbild aufgebaut. Danach wird Maskenfeld für Maskenfeld der Text eingesetzt. Sind Maskenfelder mit einer externen Datenquelle verknüpft, werden die entsprechenden Inhalte aus der zuständigen *DataConnect.* con-Datei ausgelesen. Die so zusammengesetzte Maske wird abgespeichert und dann wie eine Bilddatei behandelt. Ist als Ereignis das Umschalten auf den Video-Eingang des Playmoduls 2 vorgesehen, wird dies in der Ablauf.dat durch einen gesonderten Befehl weitergereicht.

Nachdem die Ablauf dat in das zuständige Verzeichnis kopiert wurde, prüft das Playmodul 2 bei jedem Durchlauf, ob diese Datei noch vorhanden ist. Ist sie in der Zwischenzeit vom Playmodul 2 gelöscht worden, wird der Inhalt gegebenenfalls als kleines Icon im Übersichtsfenster des Playmoduls 2 angezeigt. Dann wird der nächste aktuelle Eintrag im Ablaufplan 5 gesucht.

Die Anzeige als Icon erfolgt nur, wenn das Übersichtfenster ausgewählt wurde. Es empfiehlt sich, dieses Fenster nur dann im Vordergrund zu halten, wenn die Monitore überprüft werden sollen. Auch das Anzeigen der Kontrollbilder benötigt Rechenzeit, die vor allem bei größeren Anlagen die Aktualisierung der Monitore erheblich verlangsamen kann.

Als weitere Aufgabe wird vom Playmodul 2 bei jedem Durchlauf das Vorhandensein einer Kommando-Datei überprüft. Über diese Datei (*Arbeitsverzeichnis*\Command.dat) kommunziert das Workmodul 1 mit dem Playmodul 2. Die Command.dat teilt dem Playmodul 2 z.B. mit, ob ein neuer Ablaufplan erstellt wurde. Ist dies der Fall, unterbricht das Programm seine Arbeit und vollzieht die gleiche Vorgehensweise wie bei einem Neustart.

Ein Workmodul 1 kann beliebig viele Playmodule 2 steuern. Ebenso ist es möglich, daß beliebig viele Workmodule 1 auf ein Playmodul 2 zugreifen.

Ein Bestandteil des Workmoduls 1 ist das Bilderbuch. Es dient als Sammelstelle und Filter für alle Ereignistypen. Alle über das Bilderbuch dem System zugefügten Ereignisdateien werden im Unterverzeichnis "PictureBook" des Arbeitsverzeichnisses abgelegt. Von hier werden sie dann bei Bedarf in die Ablaufpläne eingefügt. Das PictureBook kennt die Ereignis-Datei-Formate:
Grafikformate:
   *.bmp, *.jpg, *.gif
Animationsformate:
   *.mpeg *.avi, *.mpeg
Maskenformat:
   * .msk.

Weitere Datenformate werden über Plugins verarbeitet.

Über das Workmodul 1 wird für jeden in das System eingebundenen Monitor ein Ablaufplan generiert. Die Ablaufplan-Dateien tragen den Namen All.cpt und befinden sich im Unterverzeichnis tmpSave\cMon00*n* des Arbeitsverzeichnisses.

Die Ablaufpläne müssen nach dem Bearbeiten zuerst an das zuständige Playmodul 2 geschickt werden, erst dann können sie auf den Monitoren angezeigt werden.

Das Playmodul-Programm schreibt nach dem Start seine Netzwerkknotennummer in die Datei cMonitor.log, die sich im Arbeitsverzeichnis des Playmoduls 2 befindet. Gleichzeitig wird geprüft, ob diese Nummer bereits vorhanden ist und ihr eine Monitornummer zugewiesen wurde.

Jetzt sucht das Playmodul 2 die Datei Ablauf.dat, die sich im Unterverzeichnis cMon*Monitornummer* des Arbeitsverzeichnisses befinden muß. Wird die Datei gefunden, zeigt das Playmodul 2 das darin befindliche Ereignis für die ebenfalls in dieser Datei befindliche Standzeitangabe an. Nach Ablauf der Standzeit wird die Ablauf.dat erneut geöffnet und geprüft, ob ein neues Ereignis vorliegt.

Wurde über den Masterassistenten das Vorladen von Ereignisdateien eingestellt, wird dem Playmodul 2 beim Start als erstes der Befehl übermittelt, alle statischen Ereignisse (Bilder, Animationen) auf die eigene Festplatte zu kopieren. Dadurch wird das Netzwerk erheblich entlastet, da nur noch die Maskenereignisse direkt vom Workmodul 1 (also über Netz) kopiert werden.

Im folgenden sollen weitere mögliche Ausführungformen der Erfindung näher diskutiert werden.

Ein Ereignis ist eine einzelne Aktion, die auf dem Ausgabemonitor ausgeführt werden soll.

Mögliche Ereignisse sind:
Die Darstellung eines Bildes
Das Abspielen einer Animation
Das Anzeigen einer Maske

Ereignisse haben zwei Einstellungsmöglichkeiten: Die Standzeit, die bestimmt, wie lange ein Ereignis durchgeführt wird und die Art der Überblendung.

Die Standzeit wird in Sekunden angegeben. Ist das Ereignis eine Animation, wird diese nach Ablauf der Standzeit gegebenenfalls noch bis zu ihrem Ende abgespielt.

Die eingestellte Überblendung bestimmt, wie das aktuelle Ereignis das vorhergehende ablöst.

Ein Ablaufplan enthält alle Informationen, die das Playmodul benötigt, um die Monitore zu steuern. Für jeden Monitor wird ein getrennter Ablaufplan erstellt. Er ist in maximal fünf Startzeiten unterteilt, denen jeweils 32 Ereignisse zugewiesen werden können.

### Monitor 1

Startzeit 1
   Ereignis 1, Standzeit, Überblendung
   Ereignis 2, Standzeit, Überblendung
   Ereignis 3, Standzeit, Überblendung
   Ereignis n, Standzeit, Überblendung
Startzeit 2
   Ereignis 1, Standzeit, Überblendung
   Ereignis 2, Standzeit, Überblendung
   Ereignis 3, Standzeit, Überblendung
   Ereignis n, Standzeit, Überblendung

Die Erstellung dieses Ablaufplans ist eine der Hauptaufgaben des Workmoduls 1.

Die Programmoberfläche des Workmoduls 1 ist in acht Bereiche aufgeteilt. Der jeweils aktive Bereich erhält die Tastatureingaben und ist farbig gekennzeichnet. Mit der Tabulatortaste wird zwischen den Bereichen hin und her geschaltet.

In einer Titelleiste können sich zwei Buttons befinden. Einer zum Verkleinern des Fensters und einer zum Beenden des Programms.

Eine Menüleiste kann neben den Systembuttons zwei Informationsfelder, die durch einen Mausklick auf den rechts neben ihnen befindlichen roten Pfeil aufgeklappt werden können, beinhalten. Sie enthalten Angaben über das angeschlossene Playmodul 2 und die in das System eingebundenen Monitore.

Im Monitorbereich können alle im System vorhandenen Monitore aufgelistet sein. Sind mehr Monitore im System als in diesem Bereich sichtbar, können die nicht sichtbaren Monitore über die an der linken Seite befindlichen Pfeile in den sichtbaren Bereich übernommen werden. Alternativ kann die untere Begrenzungslinie mit der Maus tiefer gezogen werden, um möglichst viele Monitore auf einmal sichtbar zu machen.

In einem Zeitbereich können sich die absoluten Startzeiten für die einzelnen Ablaufpläne befinden.

In einem Vorschaumonitor kann das jeweils aktuelle Ereignis des ausgewählten Monitors erscheinen.

Alle für die Programmbedienung wichtigen Buttons können sich in einem Arbeitsbereich befinden.

In einer Ereignisliste werden die Einstellungen für die einzelnen Ereignisse editiert.

In einer Ereignisübersicht erscheinen alle Ereignisse, die zu der ausgewählten Zeit auf dem selektierten Monitor ablaufen sollen.

Im Normalfall wird das Workmodul 1 bereits mit einem Playmodul 2 verbunden sein und gleich beim Start alle relevanten Daten für die Arbeit zur Verfügung stellen. Ist dies nicht der Fall, öffnet man z.B. den Windows-Explorer und prüft, ob eine Netzwerkverbindung vom Arbeitsplatz zum Rechner eingerichtet ist, auf dem das Playmodul 2 installiert wurde. Ist diese Verbindung vorhanden, wechselt man in das Workmodul 1 zurück und klickt den Button "Server wechseln" in der Menüleiste an.

Jetzt erscheint eine Liste mit allen Playmodulen 2, auf die man direkten Zugriff hat.

Nach einem Doppelklick auf den gesuchten Eintrag übernimmt das Workmodul 1 die programmrelevanten Daten vom ausgewählten Playmodul 2.

Ist das gewünschte Playmodul 2 nicht in dieser Liste enthalten, klickt man auf den Button "Server suchen". In dem nun erschienenen Requester sucht man die Datei Playmodul.mmc auf dem gewünschten Server und bestätigt das Suchergebnis. Handelt es sich um eine korrekte Verbindungsdatei, wird der Pfadname des Playmoduls 2 in die Liste übernommen. Da für viele Benutzer solche Pfadnamen eher wie Hieroglyphen wirken und vielfach auch nicht besonders aussagekräftigt sind, kann man statt der Pfadangabe einen anderen Namen (Alias-Namen) eingeben. Man klickt hierzu auf den Button "Alias-Namen" und schreibt in das untere Textfeld des Requesters den gewünschten Namen.

Wenn man das ausgewählte Playmodul 2 gleich beim Start des Workmoduls 1 aktivieren möchte, klickt an auf den Button "Standardeinstellung beim Start".

Man löscht einen Eintrag in der Serverliste, indem man diesen Eintrag markiert und den "Löschen"-Button anklickt.

Man kann die wichtigsten Informationen über das aktuell verbundene Playmodul 2 in der Menüleiste abrufen. Hierzu kann auf den Pfeil rechts neben dem Playmodul-Namen gedrückt werden.

Neben Anzahl und Auflösung der angeschlossenen Monitore erfährt man, welche Versionsnummer das Playmodul 2 hat und wann es zum letzten Mal neu gestartet wurde. Pfadangabe und Alias-Name vervollständigen die Information.

Der gewünschte Monitor kann mit der linken Maustaste auf das entsprechende Symbol im Monitorbereich aktiviert werden. Sind mehrere Monitore ins System eingebunden und der gesuchte Monitor ist nicht sichtbar, kann man entweder über die Pfeiltasten am linken Rand des Monitorbereichs alle Monitore durchscrollen oder den Monitorbereich vergrößern, indem man die Maus über die untere Begrenzungslinie plaziert und diese bei gedrückter linker Maustaste nach unten zieht.

Wenn man den Inhalt eines Monitors auf einen anderen kopieren möchte, klickt man auf den zu kopierenden Monitor, hält die linke Maustaste gedrückt und zieht diesen Monitor auf das Symbol des Monitors, auf den man den Ablaufplan kopieren möchte. Möchte man den Inhalt eines Monitors löschen, zieht man das entsprechende Symbol auf den Mülleimer im Arbeitsbereich. In der Menüleiste kann man sich Informationen über den aktiven Monitor ansehen; man klickt dazu auf den Pfeil rechts neben dem Eintrag "Monitor".

Zu unterschiedlichen Zeiten können verschiedene Ablaufpläne programmiert werden. Die Startzeiten werden festgelegt, indem das Feld "--:--" im Zeitbereich doppelt geklickt wird und es erscheint ein Fenster, das die minutengenaue Einstellung ermöglicht.

Bei der Einstellung der Startzeiten muß man berücksichtigen, daß es sich um eine Ablaufschleife handelt. Das bedeutet, daß der Ablaufplan der spätesten eingestellten Zeit gültig bleibt, bis die früheste Zeiteinstellung erreicht wurde. Ist nur eine Startzeit eingegeben, wird der Ablaufplan endlos abgespielt.

Im Zeitbereich kann man die Startzeiten untereinander kopieren, indem man eine Zeiteinstellung mit der linken Maustaste anklickt und diese bei gedrückt gehaltener Maustaste auf eine andere zieht. Man kann eine Startzeit auf einen anderen Monitor übertragen, indem man diese auf den entsprechenden Monitor zieht. Möchte man eine Startzeit löschen, zieht man diese auf den Mülleimer im Arbeitsbereich.

Ereignisse werden über das Bilderbuch in das Workmodul 1 importiert. Dabei dient das Bilderbuch zum einen als Filter, zum anderen als Sammelstelle. Man ruft das Bilderbuch auf, indem man den Button "Bilderbuch" im Arbeitsbereich anklickt.

Nach dem Start des Bilderbuchs erscheint als erstes die Inhaltsangabe. In seiner wichtigsten Funktion dient das Bilderbuch als Sammelstelle für alle Ereignisse. Man kann diese Ereignisse auf die verschiedensten Arten in das Bilderbuch übernehmen.

Zuerst sorgt man dafür, daß das Bilderbuch immer im Vordergrund angezeigt wird. Dazu aktiviert man das Schaltkästchen auf der rechten Seite der Menüleiste.

Man verkleinert das Programmfenster des Workmoduls und ruft den Windows-Explorer auf, sucht im Explorer ein Bild und klickt den Dateinamen an. Man zieht diesen bei gedrückter linker Maustaste auf das Vorschaufenster (oder die Inhaltsangabe) des Bilderbuches.

Man ruft den Internet-Explorer auf, sucht sich eine Site mit Bildern und zieht ein Bild auf das Vorschaufenster des Bilderbuches. Bei manchen Internet-Seiten klappt das nicht, da sie anders programmiert wurden. Dann klickt man auf das Bild und drückt die Tastenkombination [Strg] & [c], anschließend klickt man auf das Vorschaufenster des Bilderbuches und drückt dann die Tastenkombination [Strg] & [v].

Man kann Bilder oder Teile von Bildern auch aus anderen Programmen heraus über die Windows-Zwischenablagen in das Bilderbuch übernehmen.

Eine weitere Möglichkeit ist das Einladen über den "Laden"-Button. Hat das ausgesuchte Ereignis ein vom Programm unterstütztes Format, wird es sofort im Vorschaufenster angezeigt.

Möchte man ein Ereignis aus dem Bilderbuch löschen, klickt man auf den "Löschen"-Button. Man kann zwischen der Inhaltsangabe und der Bilderansicht wechseln, indem man entweder das gewünschte Ereignis in der Inhaltsangabe doppelt anklickt oder den Button "Inhaltsangabe" in der Menüleiste betätigt.

Hat man als aktuelles Ereignis eine Animation gewählt, kann man diese im Vorschaufenster ablaufen lassen. Man drückt dazu den Button "Animation abspielen". Ein weiterer Klick auf diesen Button beendet die Animation.

In der rechts neben dem Vorschaufenster befindlichen Klappliste kann man die Inhaltsangabe auf bestimmte Ereignistypen beschränken. In dem darunter angeordneten Textfeld erscheinen Informationen zum aktuellen Ereignis. Mit den Pfeiltasten, die bei der Bildansicht neben dem Auswahlfenster erscheinen, scrollt man durch das Bilderbuch.

Ereignisse können über die links neben dem Auswahlfenster zu findenden Buttons in den aktuellen Ablaufplan übernommen werden.
Ereignis anhängen
Ereignis einfügen
Ereignis ersetzen.

Alternativ kann man die Ereignisse mit der Maus aus dem Vorschaufenster des Bilderbuchs in den Vorschaumonitor des Workmoduls ziehen.

Nachdem ein Ereignis in den Vorschaumonitor übernommen wurde, kann es editiert werden. Man bestimmt die Länge der Standzeit, indem man auf den Button "Standzeit" klickt und anschließend entweder über die beiden Pfeile links und rechts der Standzeitangabe die Zeit verändert oder dies mittels der Pfeiltasten auf der Tastatbur erledigt. Man kann die Zeit auch direkt über die Tastatur in das Zeitfeld eingeben. Die Art, in der das neue Ereignis auf dem Monitor erscheinen soll, wählt man aus der Überblendungsliste. Dazu klickt man auf den Button "Überblendung" und wählt dann einen Eintrag aus der aufgeklappten Liste per Doppelklick aus. Eine Liste mit den Namen aller Ereignisse, die für die ausgewählte Startzeit ausgesucht wurden, findet man neben dem Einstellfeld für die Standzeit. Möchte man die Lage der Ereignisse tauschen, aktiviert man eines der zu tauschenden Ereignis-Icons und zieht es mit der Maus auf das andere.

Informationen über die Art des Ereignisses erhält man, indem man mit der rechten Maustaste auf das entsprechende Ereignis-Icon klickt. Möchte man ein Ereignis löschen, klickt man auf das dazugehörige Icon in der Ereignisübersicht und zieht es auf den Mülleimer im Arbeitsbereich. Ereignisse können auch gelöscht werden, indem man den Button "Mülleimer" direkt anklickt. Dann erscheint das "Löschen"-Fenster. In diesem Fenster kann man auswählen, welchen Bereich des Ablaufplans man löschen möchte. Man kann die Ablaufpläne für alle Monitore auf einmal löschen, indem man das Symbol mit den drei hintereinander hängenden Monitoren anklickt. Den Ablaufplan für den aktuell aktiven Monitor löscht man durch einen Mausklick auf den einzelnen Monitor mit der aktuellen Monitornummer. Den Startzeitbereich löscht man über die Zeitangabe, das einzelne Ereignis durch einen Klick auf das Ereignis-Icon.

Ist der Vorschaumonitor als Platzgründen kleiner als das Darstellungsformat der Ausgabemonitore, kann man sich die Ereignisse in Originalgröße betrachten, indem man das Ereignis aus dem Vorschaumonitor auf den Button "Bilderbuch" zieht. Es öffnet sich ein neues Fenster, das man durch einen Klick auf den "Schließen"-Button wieder verlassen kann.

In manchen Fällen kann es wichtig sein, zu wissen, wie lange insgesamt ein Ereignis auf einem Monitor pro Tag angezeigt wird, besonders, wenn Werbezeit für externe Kunden in die Ablaufpläne eingebunden wird. Um diese Zeit in Erfahrung zu bringen, klickt man auf den Button "Statistik" im Arbeitsbereich. Es erscheint eine Liste mit allen verschiedenen Ereignissen, die auf dem aktuellen Monitor dargestellt werden sollen und deren Tagesstandzeit. (Es können sich bei der Berechnung dieser Zeiten geringfügige Abweichungen ergeben, die damit zusammenhängen, daß z.B. Animationen nicht genau berechnet werden können. Es ist auch zu beachten, daß diese Statistik davon ausgeht, daß jeder Monitor 24 Stunden in Betrieb ist. Möchte man eventuelle Ausschaltzeiten berücksichtigen, muß man temporär eine oder mehrere Startzeiten hinzufügen und mit einem Ereignis füllen, das nicht im tatsächlichen Ablaufplan vorhanden ist.)

Wenn man einen umfangreichen Ablaufplan erstellt hat, kann es vorkommen, daß man ein bestimmtes Ereignis sucht und nicht mehr genau weiß, zu welcher Zeit und auf welchen Monitor man dieses Ereignis gelegt hat. In einem solchen Fall hilft die Suchfunktion für Ereignisse, man klickt dazu auf den "Suchen"-Button in der Menüleiste. Es erscheint ein Fenster, indem man den Namen des gesuchten Ereignisses eingeben kann. In der Liste unterhalb des Feldes für die Namenseingabe erscheinen alle Ereignisse gleichen Namens und die dazugehörigen Zuweisungen an Monitore und Startzeiten. Mit einem Doppelklick auf einen der Einträge wählt man das Ereignis zum aktuellen Ereignis im Vorschaumonitor.

Bevor man die Ergebnisse der Arbeit auf den Monitoren betrachten kann, muß man dem Mastermodul mitteilen, daß sich die Ablaufpläne geändert haben und alle Ereignisse müssen samt ihrer Unterstützungsdateien auf das Playmodul kopiert werden.

Dazu ist der Aufwand äußerst gering: Man klickt auf den Button "Aktueller Ablaufplan zum Server" im Arbeitsbereich und wartet anschließend ab, bis der Kopiervorgang beendet ist. Jetzt kann man sich zufrieden zurücklegen oder eine andere Arbeit aufnehmen. Für dieses Mal hat man alle weiteren Schritte wieder den Systemmodulen des Monitorsystems übergeben.

Möchte man einen Ablaufplan nicht sofort an die Monitore schicken, kann man ihn und alle dazu benötigten Dateien abspeichern. Dazu klickt man auf den "Speichern"-Button in der Menüleiste. Es erscheint das Fenster zum Abspeichern von Ablaufplänen. Man wählt ein Verzeichnis aus oder gibt ein neues Verzeichnis ein, in dem die Ablaufpläne und Ereignisdateien gespeichert werden sollen. Zusätzlich kann man weitere Informationen zu diesem Ablaufplan angeben, indem man die Pfeiltasten im Beschreibungsfeld anklickt und die entsprechenden Eingaben für:
Den Namen des Autors
Einen Gültigkeitsbeginn für den Ablaufplan
Ein Gültigkeitsende für den Ablaufplan
Eine kurze Beschreibung des Ablaufplans
vornimmt.

Um die Eingabe der Gültigkeitsdaten zu vereinfachen, kann man mit einem Doppelklick auf das Eingabefeld einen Kalender aufrufen. Hier kann man die gewünschten Termine anklicken und damit in das Eingabefeld übernehmen.

Man ruft über den "Laden"-Button das "Laden"-Fenster für Ablaufpläne auf. Man sucht ein Verzeichnis, das Ablaufpläne und Ereignisse enthält. Ein solches Verzeichnis kann man daran erkennen, daß in dem Informationsfeld an erster Stelle die Mitteilung "Ablaufplanverzeichnis" erscheint. Man klickt auf "Übernehmen", um die gespeicherten Ablaufpläne in das Workmodul zu übernehmen.

Jedes Maskenfeld hat eine Reihe von Attributen. Werte, die festlegen, was und wie in das jeweilige Feld geschrieben werden soll. Neben den Formatierungswerten (Welche Schrift ? Welche Größe ? Welche Farbe ? etc.) ist die Adresse das wichtigste Attribut. Die Adresse legt fest, woher sich das Maskenfeld die darzustellende Information holt. Für jedes einzelne Feld kann eine andere Adresse vergeben werden. Adressen können auf einen Text weisen, der Bestandteil der Maskendatei ist, sie können die Zugriffsparameter einer Datenbank zum Inhalt haben oder auch eine URL (Internetadresse) beinhalten. Die Festlegung der Attribute und die Zuweisung der Adressen erfolgt über den Maskendesigner, einem Bestandteil des Workmoduls.

Wenn man eine Maske erstellen möchte, klickt man auf den Button "Maskendesigner" im Arbeitsbereich. Damit ruft man den Maskendesigner auf und gleichzeitig wird das Workmodul 1 und gegebenenfalls das Bilderbuch in den Hintergrund verlagert.

Wie alle anderen Hilfsprogramme des Workmoduls 1, ist auch die Oberfläche des Maskendesigners in Bereiche aufgeteilt, zwischen denen man mit der Tabulatortaste hin und her schalten kann und die jeweils die Tastaturanschläge verarbeiten.

In der Menüleiste findet man neben den "System"-Buttons eine Klappliste mit den Dateien des Bilderbuchs und die Angaben über Lage und Größe der Maskenfelder. In einem Feldbearbeitungsbereich des Desktops werden die Feldeinstellungen vorgenommen. In einem Bildfeld befindet sich die Vorschau- und Arbeitsfläche. In einem Feldinhaltsbereich werden die Inhalte und die Formatierungen der Felder und Masken vorgenommen. In einem Hintergrundbearbeitungsbereich können Korrekturen des Hintergrundbildes vorgenommen werden.

Masken und Hintergrundbilder lädt man entweder über den "Laden"-Requester in das Programm oder wählt einen Eintrag aus der Klappliste in der Menüleiste. Die hierin befindlichen Ereignise sind dieselben, die auch im Bilderbuch zur Verfügung stehen. Man kann ein neues Hintergrundbild in eine bestehende Maske einladen, indem man erst die Maske und dann das Hintergrundbild lädt. Eine solche Vorgehensweise ist vor allem dann sinnvoll, wenn man unterschiedliche Hintergrundbilder mit Maskenfeldern versehen möchte, die sich an der exakt gleichen Stelle befinden sollen. Im Anschluß an das Laden des Hintergrundbildes muß man dann nur noch die Feldinhalte gegebenenfalls neu bestimmen.

Um Maskenfelder anzulegen, bedient man sich der Buttons im Feldbearbeitungsbereich.
□ Anlegen eines neuen Maskenfeldes
□ Löschen des selektierten Maskenfeldes
□ Löschen aller Maskenfelder
□ Ausrichten der selektierten Maskenfelder am horizontalen Lineal
□ Ausrichten der selektierten Maskenfelder am vertikalen Lineal
□ Duplizieren des selektierten Maskenfeldes

Maskenfelder können auf dem Bildfeld verschoben und in ihrer Größe verändert werden. Man klickt ein Maskenfeld, um es zu selektieren. Es erscheint ein Rahmen mit acht Ziehpunkten. Wenn man den Cursor innerhalb des Feldes bewegt und die linke Maustaste gedrückt hält, verschiebt man das Feld. Bewegt man die Maus auf einen der Ziehpunkte, kann man mit gedrückter linker Maustaste die Größe verändern. Man kann mehrere Felder selektieren, indem man mit der linken Maustaste auf eine freie Stelle des Bildfeldes klickt, die Taste gedrückt hält und über die gewünschten Maskenfelder zieht. Bewegt man jetzt eine der markierten Felder, werden alle anderen selektierten Felder im Verhältnis ebenfalls verschoben.

Man kann Maskenfelder löschen, indem man einzelne oder mehrere selektiert und den Button "Löschen des selektierten Maskenfeldes" drückt. Alternativ drückt man die Tastenkombination [Strg] & [x]. Durch das Betätigen des Buttons "Löschen aller Maskenfelder" löscht man alle Felder.

Wenn Maskenfelder an denselben Koordinaten plaziert werden sollen, kann man sich die Arbeit erleichtern, indem man eines der Lineale benutzt. Am oberen und am linken Rand des Bildfeldes findet man dazu die benötigten Griffpunkte. Man zieht das entsprechende Lineal in die gewünschte Position und klickt anschließend auf einen der beiden "Ausrichtung"-Buttons. Alle selektierten Felder werden dadurch an eines der Lineale ausgerichtet.

Man selektiert eines oder mehrere Maskenfelder und klickt auf den Buttton "Duplizieren des selektierten Maskenfeldes". Alternativ kann man die Tastaturkombinationen [Strg] & [c] und [Strg] & [c] nacheinander drücken.

Rechts neben dem Bildfeld wird die Anzahl der vorhandenen Maskenfelder angezeigt. An der Färbung der Kontrollpunkte erkennt man, welche Felder selektiert sind. Durch das Anklicken eines Kontrollpunktes wird das entsprechende Feld zum aktiven Feld und man kann es beispielsweise über die Tastenkombination [Strg] & [x] löschen. Das ist unter Umständen dann nötig, wenn man ein Feld so verschoben hat, daß es für den Cursor nicht mehr zu erreichen ist. Die Lage und Größe des selektierten Maskenfeldes kann man in der Menüleiste ablesen.

Man kann das Hintergrundbild durch Drücken der rechten Maustaste an einer freien Stelle und anschließendem Bewegen des Cursors in seiner Lage verändern. Zusätzlich stehen die Buttons im Hintergrundbearbeitungsbereich zur Verfügung.

Die Standardvorgabe für den Inhalt eines Maskenfeldes ist die explizite Eingabe über den Maskendesigner oder das Workmodul 1. Um den Text eines Maskenfeldes zu ändern, klickt man doppelt in das gewünschte Feld. Es erscheint ein Fenster mit einem Texteingabefeld. Hier kann man den Text nach Belieben verändern. Möchte man in einem Maskenfeld das aktuelle Datum oder die aktuelle Uhrzeit ausgeben, klickt man auf den "Datum/Uhrzeit"-Button. Man wählt aus der Klappliste des nun erschienenen Fensters das gewünschte Anzeigeformat.

Die Auswahl des Schrifttyps, dessen Größe und Darstellungsart wird über das "Schrift"-Fenster eingegeben. Man klickt dazu auf den "Schrift"-Button im Feldinhaltsbereich. In diesem Fenster findet man alle Möglichkeiten, die Schrift und ihr Aussehen nach Wunsch zu gestalten. Die Anzahl der zur Verfügung stehenden Schrifttypen ist dabei abhängig von der allgemeinen Systemkonfiguration. Nur die Schriften werden in der Typenliste angezeigt, die ordnungsgemäß in die Windows-Registrierung eingetragen sind und als "True Type"-Schriften angemeldet sind.

Alle Schriften können mit einem Schatten versehen werden, dessen Intensität man über eine Grauskala einstellen kann. Textinhalten können linksbündig, rechtsbündig und zentriert formatiert werden. Im unteren Bereich des Fensters kann man die aktuell ausgewählte Schrift als Standardvorgabe speichern.

Über das Fenster "Maskeneinstellung" kann man bestimmen, ob eine Maske innerhalb eines Ablaufs auch dann angezeigt werden soll, wenn kein Textinhalt vorhanden ist. Man klickt auf den "Masken Einstellung"-Button und gibt in dem nun erschienenen Requester die gewünschte Einstellung an.

Um die fertige Maske abzuspeichern, klickt man in der Menüleiste auf den Button "Speichern". In das Texteingabefeld des "Speicher"-Fensters gibt man den gewünschten Namen für die Maske ein. Man kann den Namen ohne Suffix angeben.

Wahlweise zur Möglichkeit, die komplette Maske abzuspeichern, kann man auch nur die einzelnen Bestandteile als eigenständige Dateien ablegen. Dazu deaktiviert man die Kontrollkästen nach Bedarf. Die Masken werden automatisch in das Unterverzeichnis "Picture Book" des Arbeitsverzeichnisses abgespeichert.

Wenn man eine Maske in einem Ablaufplan eingesetzt hat, kann man Textfelder direkt im Workmodul 1 beschreiben. Allerdings ist im Workmodul nur der Text selbst, nicht die Formatierung veränderbar. Nur wenn eine Textmaske im Vorschaumonitor sichtbar ist, wird der Button "Maskenfeld beschreiben" aktiv. Möchte man einen neuen Text eingeben, klickt man ihn mit der linken Maustaste an. Im Vorschaumonitor werden die beschreibbaren Textfelder dunkel hinterlegt. Klickt man doppelt auf eines der Textfelder, erscheint ein Eingaberequester. Hier gibt man einen neuen Text ein. Man kann jetzt jederzeit kontrollieren, welche Inhalte Maskenfelder haben. Dazu klickt man mit der rechten Maustaste auf den Bereich des Maskenfeldes im Vorschaumonitor des Workmoduls 1. Es erscheint ein Infofeld mit den Angaben über den Feldinhalt.

Ein besonderes Feature des Monitor-Informations-Systems ist die Möglichkeit der Einbindung von Datenbankinhalten in einzelne Maskenfelder. Dabei kann jedes Feld Zugriff auf eine andere Datenbankquelle nehmen. Die DataConnect-Technik ermöglicht die sehr flexible Handhabung

Ist auf dem angeschlossenen Playmodul 2 ein DataConnect-Zugriff eingerichtet, kann man im Maskendesigner Feldinhalte aus den entsprechenden Datenbanken beziehen.

Man klickt auf den Button "DataConnect" im Feldinhaltsbereich. Damit ruft man ein Fenster auf, in dem alle Eingaben vorgenommen werden können, die mit dem Zugriff auf eine Datenbank verbunden sind.

In der oberen Klappliste erscheinen alle angeschlossenen DataConnect-Module. Man wählt das gewünschte Modul aus. In der linken Seite sieht man nun eine Übersicht über die von der Datenbank bereitgestellten Informationsangebote. Werden genauere Spezifikationen angeboten, erscheinen diese in Klapplisten auf der rechten Seite des Fensters. Unterhalb der Klapplisten erscheinen bei Bedarf weitere Auswahlboxen, die sich auf den ausgewählten DataConnect-Filter beziehen. Genaue Angaben über alle Möglichkeiten eines DataConnectModuls findet man in dem dafür zuständigen Datenblatt.

Masken mit Feldern, deren Adressen sich auf Datenbanken beziehen, können nur dann erstellt werden, wenn das Workmodul 1 mit dem Playmodul 2 verbunden ist, das Zugriff auf die jeweilige Datenbank hat.

## Patentansprüche

1. Vorrichtung zum Steuern einer Datenausgabe auf zumindest zwei Ausgabegeräte (4), mit
einem Workmodul (1) und zumindest einem Playmodul (2), wobei das Workmodul (1) mit dem Playmodul (2) in einer Datenübertragungsverbindung (6) steht und jedes Playmodul (2) mit zumindest einem Ausgabegerät (4) verbunden ist, wobei
- das Workmodul (1) zum Erstellen einer Liste mit zumindest einer Ereignisabfolge für zumindest ein Ausgabegerät (4) vorgesehen ist, wobei die Ereignisabfolge zumindest ein Ereignis enthält und der Ereignisabfolge eine Absolutzeit und dem Ereignis eine Relativzeit zugeordnet ist, und wobei das Workmodul (1) die erstellte Liste an das Playmodul (2) überträgt, und
- das Playmodul (2) den Datensatz liest und das mit dem Playmodul (2) verbundene Ausgabegerät (4) entsprechend ansteuert.

2. Vorrichtung nach Anspruch 1, dadurch gekennzeichnet, daß das Workmodul (1) eine Plausibilitätsprüfung der Ereignisse durchführt.

3. Vorrichtung nach Anspruch 1 oder 2, dadurch gekennzeichnet, daß das Workmodul (1) eine Ereignisbibliothek aufweist, die u.a. Bilddaten, Textdaten, Aktionen und/oder Videoanimationen enthält.

4. Vorrichtung nach zumindest einem der Ansprüche 1 bis 3, dadurch gekennzeichnet, daß die Ereignisse auch das Lesen von externen Daten umfassen.

5. Vorrichtung nach zumindest einem der Ansprüche 1 bis 4, dadurch gekennzeichnet, daß die Liste für jedes Ausgabegerät (4) einen eigenen Ablaufplan enthält.

6. Vorrichtung nach zumindest einem der Ansprüche 1 bis 5, dadurch gekennzeichnet, daß das Playmodul (2) Ereignisse für eine Bildausgabe mit den externen Daten verknüpft und die verknüpften Daten den Datensatz für das Playmodul (2) bilden, nach dem Laden des Datensatzes das ihm zugewiesene Verzeichnis löscht, ein ihm zugewiesenes Verzeichnis des Workmoduls (1) in vorbestimmten Zeitabständen liest und bei Vorliegen eines leeren Verzeichnisses darauf schließt, daß kein neuer Datensatz vorliegt und/oder beim Ausführen eines Ereignisses betreffend das Einlesen von externen Daten einen separaten Programmablauf startet, der die externen Daten liest und vor der Übergabe in den Datensatz filtert.

7. Vorrichtung nach zumindest einem der Ansprüche 1 bis 6, dadurch gekennzeichnet, daß die externen Daten noch verfügbare Sitzplätze eines Kinosaals enthalten und die Filterfunktion erst ab einer vorbestimmten freien Sitzplatzanzahl diese weitergibt, so daß eine Verknüpfung mit dem Datensatz erfolgen kann.

8. Vorrichtung nach zumindest einem der Ansprüche 1 bis 7, dadurch gekennzeichnet, daß die Datenübertragungsverbindung (6) zwischen dem Workmodul (1) und dem Playmodul (2) über Internet erfolgt.

9. Vorrichtung nach zumindest einem der Ansprüche 1 bis 8, dadurch gekennzeichnet, daß die externen Daten aus einer Datenbank eines Kassensystems, eines Sicherheitssystems, von einer Videokamera und/oder von einem Wiegesystem kommen.

10. Vorrichtung nach zumindest einem der Ansprüche 1 bis 9, dadurch gekennzeichnet, daß das Playmodul (2) eine separate Datenschnittstelle aufweist um beispielsweise in einem Brandfall oder in einem sonstigen Notfall ein entsprechendes Notsignal zu empfangen und nach dem Empfangen des Notsignals vorbestimmte Notdatensätze für die Ausgabegeräte (4) zur Anzeige erzeugt.

11. Verfahren zum Steuern einer Datenausgabe auf zumindest zwei Ausgabegeräten (4) mit den Schritten:
- Erstellen einer Liste mit zumindest einer Ereignisabfolge für die Ausgabegeräte (4) mit einem Workmodul (1), wobei die Ereignisabfolge zumindest ein Ereignis enthält und der Ereignisabfolge eine Absolutzeit und dem Ereignis eine Relativzeit zugeordnet ist, und wobei das Workmodul (1) die erstellte Liste an ein Playmodul (2) überträgt,
- Empfangen der von dem Workmodul (1) übertragenen Liste durch das Playmodul (2), Ausführen der in der Liste enthaltenen Ereignisse und Erzeugen eines Datensatzes für jedes Ausgabegerät (4) und
- Lesen der Datensätze durch das Playmodul (2) und Ansteuern des mit dem Playmodul (2) verbundenen Ausgabegeräts (4) entsprechend dem zugeordneten Datensatz.
